# EUROPEAN PATENT APPLICATION

(11) **EP 1 701 050 A1**
(43) Date of publication of application: **13.09.2006**
(21) Application number: 04793273.6
(22) Date of filing: 25.10.2004
(51) Int. Cl.: F16C 32/04

(54) **POWER AMPLIFICATION DEVICE AND MAGNETIC BEARING**

(30) Priority: 05.11.2003 JP 2003375339
(71) Applicant: JTEKT CORPORATION, Chuo-ku Osaka-shi Osaka 542-8502 (JP)
(72) Inventor: GACHTER, Stefan, M. B. c/o JTEKT Corporation, Osaka-shi, Osaka 542-8502 (JP)
(74) Representative: Steinmeister, Helmut
(86) International application number: PCT/JP2004/016172
(87) International publication number: WO 2005/045266

(57) **Abstract**

Each of the power amplifiers (15) and (16) is provided with a current command device (17) that outputs a current command signal to be supplied to each of the electromagnets (4) and (5) based upon a current target value, a power amplifier (18) that amplifies the current command signal and supplies the resulting current to each of the electromagnets (4) and (5) and a current detecting device (19) that detects the current flowing through each of the electromagnets (4) and (5). The current command device (17) feeds back a current detection value supplied by the current detecting device (19) so that the current detection value is made equal to the current target value.

## Description

### FIELD OF THE INVENTION

The present invention relates to a power amplifier and a magnetic bearing using such a power amplifier.

### BACKGROUND OF THE INVENTION

An active magnetic bearing device, which uses a plurality of sets of active magnetic bearings that allow a rotating body to magnetically float so as to be supported in a non-contact state, has been applied to a flywheel-type power storage device and the like.

The magnetic bearing device of this type has a structure in which, for example, a vertical rotating body is supported in a non-contact state by one axial magnetic bearing unit and two radial magnetic bearing units. The axial magnetic bearing unit is used for supporting one portion of a rotating body in the axis direction at a target position in an axial control axis (control axis in the axis direction) direction in a non-contact state, and is provided with one axial magnetic bearing. The radial magnetic bearing units are used for supporting two portions of the rotating body in the axis direction at target positions in two radial control axis directions (control axes in radial directions) that are orthogonal to the axial control axis, and also orthogonal to each other, and each of the radial magnetic bearing units is provided with two radial magnetic bearings that correspond to the two radial control axes.

Each of the axial magnetic bearing and the radial magnetic bearings is provided with a pair of electromagnets that are placed in a manner so as to sandwich a supported portion of the rotating body from the two sides in the corresponding control axis directions, a displacement detecting device that detects a displacement of the rotating body in the corresponding control axis direction and an electromagnet control device that controls an exciting current to be supplied to each of the electromagnets based upon the detected value of the displacement of the rotating body. In each of the magnetic bearings, normally, the electromagnet control device is provided with a current control device that determines the target value of the exciting current to be supplied to each of the magnets based upon the detected value of the displacement, and outputs the value as an exciting current command signal and a power amplifier that amplifies the exciting current command signal, and supplies the resulting exciting current to each of the electromagnets.

Conventionally, the exciting current to be supplied to each of the electromagnets of the magnetic bearings has been formed by combining a bias current (steady-state current) and a control current. The bias currents of a pair of electromagnets are equal to each other, and maintained constant independent of the displacement of the rotating body. The control currents vary in response to the displacement of the rotating body, and with respect to one pair of electromagnets, the absolute values of the control currents are always maintained equal to each other, with their signs being opposite to each other. Here, the maximum value of the absolute value of the control current is smaller than the bias current. For this reason, an exciting current is always allowed to flow through the pair of electromagnets independent of the displacement of the rotating body.

As described above, by always supplying a bias current to one pair of electromagnets of each of the magnetic bearings, the advantage that the relationship between the control current and the magnetic attracting force by the pair of the electromagnets is linearized can be obtained; however, the resulting problems are that the power consumption by the electromagnets is great and that the subsequent power consumptions of a magnetic bearing and a device using the magnetic bearing become greater.

In order to solve these problems, Japanese Unexamined Patent Application Publication No. 11-22730 has proposed a magnetic bearing that is subjected to a so-called zero-bias current controlling operation in which both of the bias currents of the paired electromagnets are set to 0 or a bias current is supplied to only one of the electromagnets. In the magnetic bearing of this type, the bias currents of both of the electromagnets are set to 0 when the control axis is horizontal, and a bias current is supplied to only the electromagnet placed on the upper side when the control axis is not horizontal.

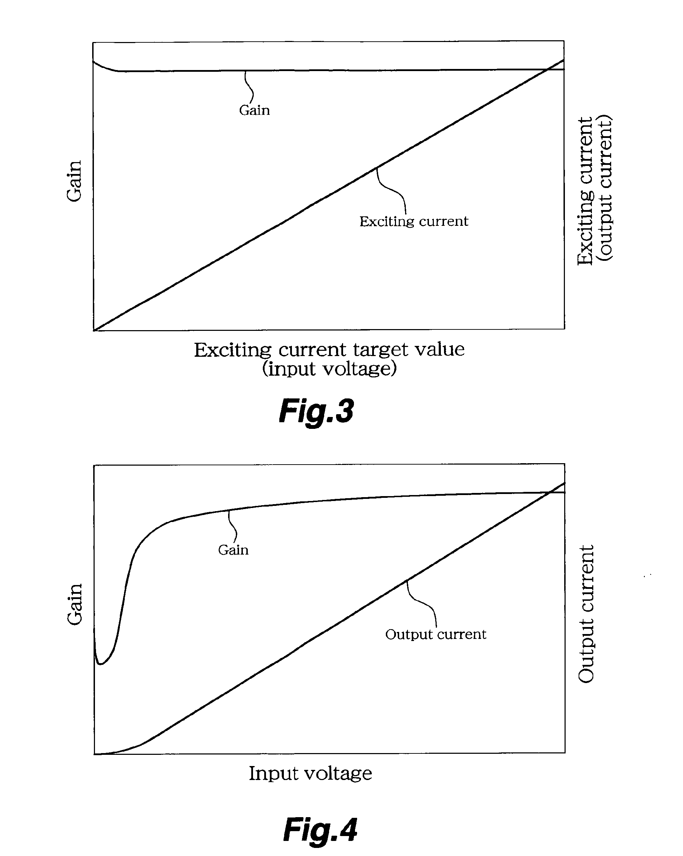

In this case, however, with respect to a power amplifier to be used for the above-mentioned electromagnet control device for the magnetic bearing, although the relationship between an input voltage and an output current (exciting current) is linearly maintained from the viewpoint in a wide range of the input voltage (exciting current target value), as shown in Fig. 4, the relationship of the two factors is not linearly maintained in a minute range of the input voltage, and in this range, the gain becomes smaller. For this reason, in the case when the rotating body is near the target position with the exciting current target value beingminute, the exciting current actually flowing through the electromagnet becomes smaller than the exciting current target value, making the positional control of the rotating body unstable.

For example, in the case when the linearizing circuit is used as shown in Japanese Unexamined Patent Application Publication No. 2002-39176, although the relationship between the input voltage and the output current can be linearized, the resulting structure of the power amplifier becomes complex to cause high costs.

One objective of the present invention is to provide a power amplifier that can linearize the relationship between an input voltage and an output current even in a minute range.

Another objective of the present invention is to provide a magnetic bearing in which the power amplifier linearizes the relationship between an input voltage and an output current so that, even in the case of a zero-bias current controlling process with the rotating body being located near the target position, a stable positional controlling process is carried out.

### DISCLOSURE OF THE INVENTION

A power amplifier in accordance with the present invention, which is provided with a current command means that outputs a current command signal based upon a current target value to be supplied to a body to be driven, a current amplifier that amplifies the current command signal to supply the resulting current to the body to be driven and a current detecting means that detects a current flowing through the body to be driven, has a structure in which the current command means feeds back a current detection value obtained by the current detectingmeans so that the exciting current command signal is controlled so as to make the current detection value equal to the current target value.

With respect to the body to be driven, for example, electromagnets constituting a magnetic bearing and electric motors for use in various driving devices are listed.

The current target value is prepared as a voltage value, which forms the input voltage of the power amplifier. The current command signal from the current command means is also given as a voltage value, which forms the input voltage of the power amplifier.

Since the current command means feeds back the current detection value so as to control the current command signal, the relationship between the current target value corresponding to the input voltage and the output current can be linearized even in a minute range of the input voltage in which the input voltage (current command signal) and the output current of the power amplifier is not linearized, that is, in a minute range of the current target value.

Therefore, even in the case when the power amplifier is used for driving electromagnets of a magnetic bearing, that is, in the case when a controlling process having a bias current set to 0 or a minute value is carried out, the exciting current flowing through the electromagnet is made equal to the exciting current target value so that a stable positional controlling operation is carried out. Moreover, even in the case when an electric motor is driven by a minute voltage, the stable controlling operation is carried out in the same manner.

In this manner, in accordance with the power amplifier of the present invention, the relationship between an input voltage and an output current can be linearized even in a minute range of the input voltage; therefore, in the case when the bias current of each of electromagnets of the magnetic bearing is set to 0 or a minute value, or in the case when an electric motor for various driving devices is driven by a minute voltage, it is possible to carry out a stable controlling operation.

A magnetic bearing in accordance with the present invention, which is a magnetic bearing used for supporting a rotating body in one control axis direction in a non-contact state, is provided with a pair of electromagnets that are placed in a manner so as to sandwich the rotating body from the two sides in the control axis direction so as to support the rotating body at a target position in the control axis direction in a non-contact state by using a magnetic attracting force, a displacement detecting means that detects a displacement of the rotating body from the target position, an exciting current target value determining means that determines a target value of an exciting current to be supplied to each of the electromagnets based upon the displacement detection value of the rotating body and two power amplifiers that amplify the exciting current target value so as to supply exciting currents to the respective electromagnets, and in this structure, each of the power amplifiers is provided with a current command means that outputs a current command signal based upon the exciting current target value, a current amplifier that amplifies the exciting current command signal to supply the resulting exciting current to the electromagnet and a current detectingmeans that detects the exciting current flowing through the magnet, and has a structure in which the current command means feeds back an excited current detection value obtained by the current detecting means so that the exciting current command signal is controlled so as to make the exciting current detection value equal to the exciting current target value.

In the same manner as described above, the relationship between an exciting current target value forming the input voltage and an exciting current forming the output current can be linearized even in a minute range of the input voltage in which the relationship between the input voltage (exciting current command signal) of the power amplifier and the exciting current forming the output current is not linearized, that is, in a minute range of the exciting current target value.

In this manner, in accordance with the magnetic bearing of the present invention, the relationship between the input voltage and the output current of the current amplifier is linearized so that, even in the case when the bias current of each electromagnet is controlled to 0 or a minute value, with the rotating body being located near the target position, it is possible to carry out a stable controlling operation.

In the magnetic bearing of the present invention, for example, the control axis is maintained horizontal, and the exciting current target value determining means determines an exciting current target value with respect to each of the electromagnets, by using only the control current that varies depending on the displacement detection value of the rotating body as the exciting current.

In other words, when the control axis is horizontal, for example, bias currents are set to 0 with respect to both of the electromagnets, and only the control current that varies depending on the displacement of the rotating body is supplied as an exciting current. In this case, the control current of at least one of the electromagnets (the electromagnet on the side at which the rotating body has a displacement from the target position), that is, the exciting current, is set to zero.

Moreover, in the magnetic bearing of the present invention, for example, the control axis is not horizontal, and the exciting current target value determining means determines the exciting current target value by using only the control current that varies depending on the displacement detection value of the rotating body as an exciting current, with respect to the electromagnet on the lower side, and also determines the exciting current target value by using a current formed by combining a predetermined bias current and the control current that varies depending on the displacement detection value of the rotating body as an exciting current, with respect to the electromagnet on the upper side.

In other words, in the case when the control axis is not horizontal, for example, a bias current is supplied only to the electromagnet on the upper side, with the bias current to the electromagnet on the lower side being set to 0. Moreover, an exciting current, formed by combining a bias current and a control current with each other, is supplied to the electromagnet of the upper side, with only the control current being supplied to the electromagnet on the lower side as an exciting current. In this case also, the control current of at least one of the electromagnets (the electromagnet on the side at which the rotating body has a displacement from the target position) is set to 0.

In this manner, by setting the bias current of both of the electromagnets or one of the electromagnets to 0, it becomes possible to reduce power consumption.

As described above, even in a minute range of the exciting current target value, since the relationship between the exciting current target value and the exciting current can be linearized; therefore, even in the case when the bias voltage of the electromagnet is set to 0, with the rotating body being located near the target value, the exciting current flowing through the electromagnet is made equal to the exciting current target value so that it becomes possible to carry out a stable positional controlling operation.

### BRIEF DESCRIPTION OF THE DRAWINGS

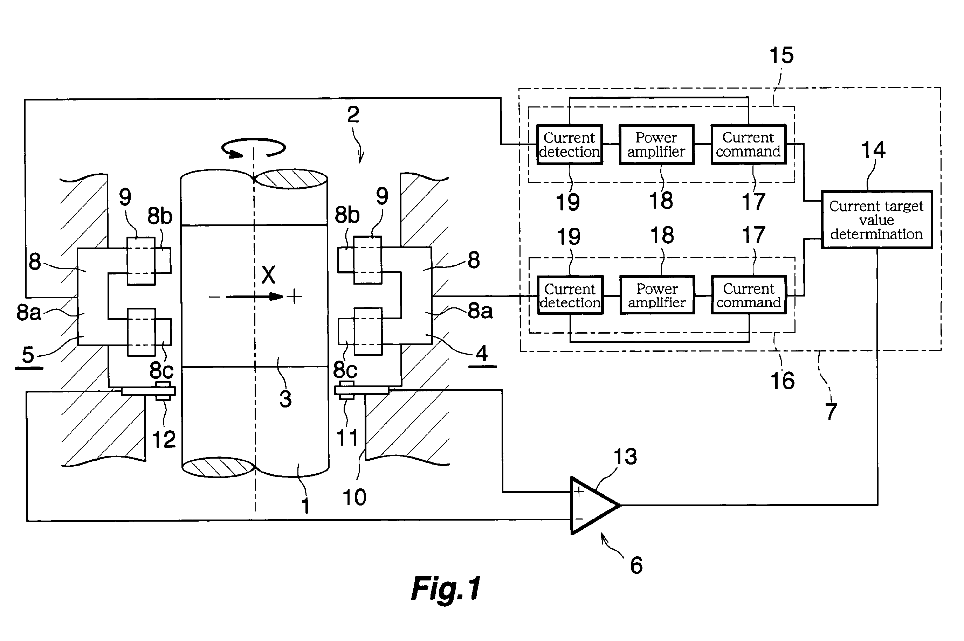

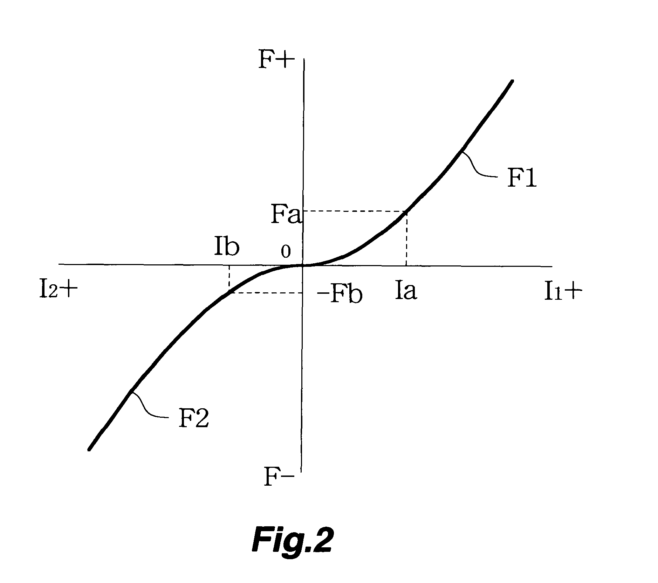

FIG. 1 is a block diagram of a radial magnetic bearing showing one embodiment of the present invention. Fig. 2 is a graph that shows a relationship between an exciting current of an electromagnet and its magnetic attracting force in the radial magnetic bearing of Fig. 1. Fig. 3 is a graph that shows relationships among an exciting current target value, an exciting current and a gain in a power amplifier of the radial magnetic bearing of Fig. 1. Fig. 4 is a graph that shows relationships among an input voltage, an output current and a gain in the power amplifier.

### BEST MODE FOR CARRYING OUT THE INVENTION

Referring to Figures, the following description will discuss an embodiment in which the present invention is applied to the above-mentioned magnetic bearing for use in a flywheel power storage device.

Although the entire structure is omitted from the drawing, the power storage device has a structure in which, as described earlier, a vertical rotating body (1) is supported by an axial magnetic bearing unit and two upper and lower radial magnetic bearing units in a non-contact state, and Fig. 1 shows one radial magnetic bearing (2) of two radial magnetic bearings that constitute each of the radial magnetic bearing units.

The radial magnetic bearing (2), shown in Fig. 1, which supports the rotating body (1) in a direction of one control axis (which is referred to as "X-axis") of two radial control axes in a non-contact state, is provided with a pair of electromagnets (4) and (5) that are placed in a manner so as to sandwich a target (a portion to be supported) (3) on the periphery of the rotating body (1) from the two sides in the X-axis direction so as to support the rotating body (1) at a predetermined target position in the X-axis direction by a magnetic attracting force in a non-contact state; a displacement detecting device (6) that forms a displacement detecting means used for detecting a displacement of the rotating body (1) from a target position in the X-axis direction; and an electromagnet control device (7) that forms an electromagnet control means used for controlling exciting currents of the respective electromagnets (4) and (5) based upon the displacement of the rotating body (1) in the X-axis direction so as to support the rotating body (1) at the target position in a non-contact state. Here, on the pair of the electromagnets (4) and (5), the one on the X-axis positive side is referred to as the first electromagnet (4), and the other on the X-axis negative side is referred to as the second electromagnet (5).

Each of the electromagnets (4) and (5) is provided with a core (8) having a structure with a U-letter shape in which a pair of magnetic pole portions (8b) and (8c) protruding inward in the X-axis direction are integrally formed on two end portions of a connecting portion (8a) that extends in the axis direction of the rotating body (1) and a coil (9) that is wound around the two magnetic pole portions (8b) and (8c) of the core (8). The connecting portion (8a) of the respective electromagnets (4) and (5) is secured to the inner circumferential portion of a cylinder-shaped housing (10), and the magnetic pole portions (8a) and (8c) are aligned face to face with a target (3) of the rotating body (1) from the outsides in the X-axis direction with slight gaps. The coil (9) of each of the electromagnets (4) and (5) is connected to the electromagnet control device (7). Thus, the magnetic pole portions (8b) on the upper side of the paired electromagnets (4) and (5) are excited to the same polarity, and the magnetic pole portions (8c) on the lower side thereof are excited to the same polarity that is opposite to the above-mentioned polarity. In this example, the magnetic pole portion (8b) on the upper side forms the N pole and the magnetic pole portion (8c) on the lower side forms the S pole.

The displacement detecting device (6) is provided with a pair of displacement sensors (11) and (12) that are secured to the inner circumferential portion of the housing (10) just below the respective electromagnets (4) and (5) in a manner so as to sandwich the rotating body (1) from both of the sides, and detects the sizes of the gaps to the rotating body (1) in the X-axis direction, and a subtracter (13) that finds a dislocation of the rotating body (1) from the target position in the X-axis direction by subtracting the output of the second sensor (12) from the output of the first sensor (11). The output from the subtracter (13), that is, a detected value of the displacement is inputted to the control device (7).

The control device (7), which sets bias currents of both of the electromagnets (4) and (5) to 0, supplies an exciting current formed only by the control current to either one of the electromagnets (4) and (5) when the rotating body (1) has a displacement in the X-axis direction. Therefore, when the displacement of the rotating body (1) is 0, the control current of each of the electromagnets (4) and (5) is set to 0, and the exciting current of each of the electromagnets (4) and (5) is also set to 0. In this case, since the X-axis serving as a control axis is maintained horizontal, the component in the X-axis direction of gravity that is exerted on the rotating body (1) is 0, and in the case when the rotating body (1) is at the target position, even if the exciting currents of both of the electromagnets are 0, with magnetic attracting forces of both of these being set to 0, the force in the X-axis direction, which is exerted on the rotating body (1), becomes 0, making it possible to maintain a balanced state. Moreover, when the rotating body (1) is displaced toward the X-axis negative side from the target position, a control current (= exciting current) having a positive value corresponding to the amount of displacement is supplied only to the first electromagnet (4) on the X-axis positive side so that the rotating body (1) is attracted in the X-axis positive direction by the magnetic attracting force of the electromagnet (4). When the rotating body (1) is displaced in the X-axis positive direction, a control current (= exciting current) having a positive value corresponding to the amount of displacement is supplied only to the second electromagnet (5) on the X-axis negative side so that the rotating body (1) is attracted in the X-axis negative side by the magnetic attracting force of the electromagnet (5). In this manner, by controlling the control currents of the paired electromagnets (4) and (5), the rotating body (1) is maintained at the target position in the X-axis direction.

The control device (7) is provided with an exciting current target value determining device (14) serving as an exciting current target value determining means and two power amplifiers (15) and (16) corresponding to the respective electromagnets (4) and (5). As will be described later in detail, the target value determining device (14) determines the target values of exciting currents to be supplied to the respective electromagnets (4) and (5) based upon the displacement detection value of the rotating body (1). The power amplifiers (15) and (16) are used for amplifying the exciting current target values given from the target value determining device (14) and for supplying these values to the electromagnets (4) and (5).

Each of the power amplifiers (15) and (16) is provided with a current command device (17) serving as a current command means, a power amplifier (18) and a current detecting device (19) serving as a current detecting means. The respective current detecting devices (19) are connected to coils (9) of the respective electromagnets (4) and (5) so that exciting currents flowing through these are detected. The current command device (17) outputs an exciting current command signal based upon the exciting current target value from the target value determining device (14) and the exciting current detection value from the detecting device (19). In other words, the exciting current detection value is fed back so as to control the exciting current command signal so that the detection value is made equal to the exciting current target value. The respective power amplifiers (18) amplify exciting current command signals from the current command devices (17), and supply exciting currents to the coils (9) of the respective electromagnets (4) and (5). With respect to the power amplifier (18), the same devices as those conventionally used, which have characteristics as shown in Fig. 4 in which no linear relationship between the input voltage and the output current is prepared in a minute range of the input voltage, may be used.

In the above-mentioned power amplifiers (15) and (16), the current command device (17) feeds back the exciting current detection value to control the exciting current command signal; therefore, as shown in Fig. 3, the relationship between the exciting current target value forming an input voltage of each of the power amplifiers (15) and (16) and an exciting current forming an output current thereof can be linearized over the entire range of the input voltage, even in the case when the relationship between the input voltage and the output current of the power amplifier (18) is not maintained linearly in the entire portion of the input voltage or one portion thereof, for example, in a minute range of the input voltage, and the resulting gain is made virtually constant. For this reason, in the case when the bias current of each of the electromagnets (4) and (5) is set to 0, as described above, even if the rotating body (1) is located near the target position, with the exciting current target value to be supplied to either one of the electromagnets (4) and (5) being minute, the exciting current to flow through the electromagnets (4) and (5) is made equal to the exciting current target value so that it is possible to carry out a stable controlling operation.

Next, referring to Fig. 2, the following description will discuss the determining process of the exciting current target value in the target value determining device (14).

Fig. 2 is a graph that shows the relationship between the exciting current and the magnetic attracting force of the paired electromagnets (4) and (5). In Fig. 2, a portion on the right side of origin (0) on the axis of abscissas indicates an exciting current I1 of the first electromagnet (4), and the right side corresponds to positive, and the left side corresponds to negative. A portion on the left side of origin (0) on the axis of abscissas indicates an exciting current I2 of the second electromagnet (5), and the left side corresponds to positive and the right side corresponds to negative. The axis of coordinates indicates the magnetic attracting force F exerted by the electromagnets (4) and (5), and the upper side corresponds to positive and the lower side corresponds to negative. Here, F1 indicates the magnetic attracting force of the first electromagnet (4) and F2 indicates the magnetic attracting force of the second electromagnet (5). The exciting currents I1 and I2 have a value of 0 or positive values, and when either one of them has a positive value, the other is 0. Here, the bias currents of both of the electromagnets (4) and (5) are set to 0; therefore, when the control current is 0, the exciting currents I1 and I2 of the electromagnets (4) and (5) are 0, and the magnetic attracting forces F1 and F2 are also 0. The magnetic attracting force F1 of the first electromagnet (4) is a positive value, and allowed to increase in quadratic function in response to an increase of the exciting current I1. When the exciting current I1 of the first electromagnet (4) is a positive value, the exciting current I2 of the second electromagnet (5) is 0, and since its magnetic attracting force F2 is 0, the magnetic attracting force F1 of the first electromagnet (4), as it is, is allowed to form the entire magnetic attracting force. The magnetic attracting force F2 of the second electromagnet (5) is a negative value, and its absolute value increases in quadratic function in response to an increase of the exciting current I2. When the exciting current I2 of the second electromagnet (5) is a positive value, the exciting current I1 of the first electromagnet (4) is 0, and since its magnetic attracting force F1 is 0, the magnetic attracting force F2 of the second electromagnet (5), as it is, is allowed to form the entire magnetic attracting force. The relationship between the exciting current I1 and the magnetic attracting force F1 of the first electromagnet (4) and the relationship between the exciting current I2 and the magnetic attracting force F2 of the second electromagnet (5) are stored in the target value determining device (14).

Based upon a displacement of the rotating body (1) detected by the displacement detecting device (6), the target determining device (14) finds the corresponding magnetic attracting force of the entire portion of the paired electromagnets (4) and (5) . This process is the same as that carried out in an electromagnet control device of a conventional magnetic bearing. Moreover, as will be described below, based upon the above-mentioned magnetic attracting value, exciting current target values to be supplied to the respective electromagnets (4) and (5) are found, and these values are outputted to the corresponding current command devices (17) of the power amplifiers (15) and (16).

When the displacement of the rotating body (1) is 0, the magnetic attracting force values of the electromagnets (4) and (5) are 0, and since both of the corresponding exciting currents I1 and I2 are 0, both of the exciting current target values to be determined in the target value determining devices (14) and outputted to the power amplifiers (15) and (16) are 0. For this reason, the exciting currents to be supplied to the respective electromagnets (4) and (5) from the amplifying devices (15) and (16) are 0 so that the entire magnetic attracting force becomes 0, with the result that a force in the X-axis direction to be exerted on the rotating body (1) becomes 0, thereby maintaining the rotating body (1) at the target position.

When the rotating body (1) is displaced toward the negative side, the magnetic attracting force value, found in the target value determining device (14), has a positive value. Supposing this value to be Fa, the target value determining device (14) sets the exciting current target value of the second electromagnet (5) to 0, and outputs this value to the current command device (17) of the second power amplifier (16) as the second exciting current target value, and also finds the exciting current value Ia of the first electromagnet (4) corresponding to Fa based upon the stored relationship between the magnetic attracting force F1 and the exciting current I1; thus, this value is outputted to the first power amplifier (15) as the first exciting current target value. Consequently, a magnetic attracting force Fa is generated in the first electromagnet (4) so that the rotating body (1) is attracted toward the X-axis positive direction.

When the rotating body (1) is displaced toward the positive side, the magnetic attracting force value, found in the target value determining device (14), has a negative value. Supposing this value to be (-Fb), the target value determining device (14) sets the exciting current target value of the first electromagnet (4) to 0, and outputs this value to the current command device (17) of the first power amplifier (15) as the first exciting current target value, and also finds the exciting current value Ib of the second electromagnet (5) corresponding to (-Fb) based upon the relationship between the stored magnetic attracting force F2 and the exciting current I2; thus, this value is outputted to the second power amplifier (16) as the second exciting current target value. Consequently a magnetic attracting force (-Fb) is generated in the second electromagnet (5) so that the rotating body (1) is attracted toward the X-axis negative direction.

The paired electromagnets (4) and (5) are controlled as described above so that the rotating body (1) is held at the target position in the X-axis direction.

Although not shown in Figures, the radial magnetic bearing in the other radial control axis direction (which is referred to as "Y-axis") also has the same structure as the above-mentioned radial magnetic bearing (2) in the X-axis direction. Moreover, the upper and lower two radial magnetic bearing units have the same structure. Thus, by the magnetic bearing (2) in the X-axis direction and the magnetic bearing in the Y-axis direction of the upper and lower two radial magnetic bearing units, the rotating body (1) is supported at the target position in the X-axis direction as well as in the Y-axis direction, in a non-contact state.

Although not shown in Figures, the axial magnetic bearing unit is provided with an axial magnetic bearing that is used for supporting the rotating body (1) in the axial control axis (which is referred to as "Z-axis") direction in a non-contact state. The axial magnetic bearing is provided with a pair of upper and lower electromagnets that are secured to the inner circumferential portion of the housing (10) in a manner so as to sandwich the flange portion (portion to be supported) of the rotating body (1) from the two sides in the Z-axis direction, in order to support the rotating body (1) at a predetermined target position in the Z-axis direction by using the magnetic attracting force. The bias current of the electromagnet on the lower side is set to 0, and a fixedbias current is always supplied to only the electromagnet on the upper side so that the magnetic attracting force of the electromagnet on the upper side by this bias current and the gravity exerted on the rotating body (1) downward in the Z-axis direction are balanced with each other. The other arrangements are the same as those in the above-mentioned radial magnetic bearing, and by controlling the control currents of the paired electromagnets, the rotating body (1) is held at the target position in the Z-axis direction.

The target value determining device (14) is formed by one DSP, and each of the two current command devices (17) is formed by another DSP. The DSP is an abbreviation of a digital signal processor, which indicates an exclusively-usedhardware to which a digital signal is inputted so as to output a digital signal and which is soft-ware programmable, and allows a high-speed real-time process.

The target value determining device (14) and the two current command devices (17) may be formed by a single DSP. Moreover, in place of the DSP, another digital processing means, such as a CPU and an MPU, may be used.

The above-mentioned embodiment has exemplified a structure in which at least one of bias currents of the paired electromagnets constituting the magnetic bearing is set to 0; however, the present invention may also be applied to a magnetic bearing in which fixed bias currents are always supplied to both of the paired electromagnets.

Moreover, the power amplifier in accordance with the present invention may be applied not only to a magnetic bearing but also to, for example, a driving system of another body to be driven such as an electric motor.

### INDUSTRIAL APPLICABILITY

The magnetic bearing device in accordance with the present invention is suitably used for supporting a rotating body rotating at a high speed in a non-contact state, for example, in a flywheel-type power storage device or the like. The power amplifier in accordance with the present invention is suitably used for driving an electromagnet, for example, in the magnetic bearing as described above, as well as for driving an electric motor for use in various driving devices. By using the power driving device of the present invention, it becomes possible to linearize the relationship between an input voltage and an output current, even in a minute range of the input voltage, and consequently to carry out a stable controlling operation even in the case when a bias current of an electromagnet in a magnetic bearing is set to 0 or a very minute value, or in the case when an electric motor for use in various driving devices is driven by a minute voltage.

## Claims

1. A power amplifier comprising:
current command means for outputting an exciting current command signal based upon a current target value to be supplied to a body to be driven;
a current amplifier that amplifies the current command signal to supply the resulting current to the body to be driven; and
current detecting means for detecting a current flowing through the body to be driven,
wherein the current command means feeds back a current detection value obtained by the current detecting means so that the exciting current command signal is controlled so as to make the current detection value equal to a current target value.

2. A magnetic bearing, which is used for supporting a rotating body in one control axis direction in a non-contact state,
comprising:
a pair of electromagnets that are placed in a manner so as to sandwich the rotating body from the two sides in the control axis direction so as to support the rotating body at a target position in the control axis direction in a non-contact state by using a magnetic attracting force;
displacement detecting means for detecting a displacement of the rotating body from the target position;
exciting current target value determining means for determining an exciting current target value to be supplied to each of the electromagnets based upon the displacement detection value of the rotating body; and
two power amplifiers that amplify the exciting current target value so as to supply exciting currents to the respective electromagnets,
wherein: each of the power amplifiers comprises current command means for outputting an exciting current command signal based upon the exciting current target value, a current amplifier that amplifies the exciting current command signal to supply the resulting exciting current to the electromagnet and current detecting means for detecting the exciting current flowing through the magnet, and has a structure in which the current command means feeds back an excited current detection value obtained by the current detecting means so that the exciting current command signal is controlled so as to make the exciting current detection value equal to the exciting current target value.

3. The magnetic bearing according to claim 2, wherein: the control axis is maintained horizontal, and the exciting current target determining means determines an exciting current target value with respect to each of the electromagnets, by using only the control current that varies depending on the displacement detection value of the rotating body as the exciting current.

4. The magnetic bearing according to claim 2, wherein: the control axis is not horizontal, and the exciting current target value determining means determines the exciting current target value by using only the control current that varies depending on the displacement detection value of the rotating body as an exciting current, with respect to the electromagnet on the lower side, and also determines the exciting current target value by using a current formed by combining a predetermined bias current and the control current that varies depending on the displacement detection value of the rotating body as an exciting current, with respect to the electromagnet on the upper side.
